## Europäisches Patentamt

## European Patent Office

## Office européen des brevets

(11) Veröffentlichungsnummer: **0 005 457**
**B1**

(12) # EUROPÄISCHE PATENTSCHRIFT

(45) Veröffentlichungstag der Patentschrift:
**12.08.81**

(51) Int. Cl.³: **B 23 B 31/16**

(21) Anmeldenummer: **79101214.9**

(22) Anmeldetag: **23.04.79**

(54) **Spannfutter für Drehmaschinen.**

(30) Priorität: **19.05.78 DE 2821851**

(43) Veröffentlichungstag der Anmeldung:
**28.11.79 Patentblatt 79/24**

(45) Bekanntmachung des Hinweises auf die Patenterteilung:
**12.08.81 Patentblatt 81/32**

(84) Benannte Vertragsstaaten:
**CH DE FR GB IT**

(56) Entgegenhaltungen:
**DE-A-2 711 904**
**DE-B-2 052 037**
**DE-B-2 436 529**
**DE-U-7 200 748**
**US-A-3 682 491**

(73) Patentinhaber: **Röhm, Günter Horst,
Heinrich-Röhm-Strasse 50, D-7927 Sontheim (DE)**

(72) Erfinder: **Röhm, Günter Horst, Heinrich-Röhm-Strasse 50,
D-7927 Sontheim (DE)**

(74) Vertreter: **Fay, Hermann, Dipl.-Phys. Dr., Postfach 1767,
Ensingerstrasse 21 D-7900 Ulm (Donau) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Spannfutter für Drehmaschinen

Die Erfindung betrifft ein Spannfutter für Drehmaschinen mit radial im Futterkörper verstellbaren Spannbacken, die zu ihrer Verstellung einzeln oder gemeinsam mit einem mit Wegkontrolleinrichtungen verbundenen Antriebsglied in kraft- und formschlüssigem Eingriff stehen, wobei die Spannbacken radial und quer zur Futterachse in einen axial vorderen Backenteil und einen axial hinteren Backenteil aufgetrennt sind, beide Backenteile jeweils für sich radial verstellbar im Futterkörper geführt sind, und nur der hintere Backenteil mit dem Antriebsglied im Eingriff steht, und wobei ein ein- und ausrückbares Kupplungsstück in Form eines am hinteren Backenteil parallel zur Futterachse geführten, in radialer Richtung starr gehaltenen Schiebers vorgesehen ist, der im eingerückten Kupplungszustand beide Backenteile zur radialen Mitnahme des vorderen Backenteiles durch den hinteren Backenteil verbindet und im ausgerückten Kupplungszustand den vorderen Backenteil zur vom hinteren Backenteil unabhängigen radialen Verstellung freigibt, und der zur Verstellung zwischen dem eingerückten und dem ausgerückten Zustand an einem von außen betätigbaren Stellglied zwangsgeführt ist, das seinerseits im wesentlichen radial verstellbar im hinteren Backenteil geführt ist und schräge Führungsflächen für die axiale Zwangsführung des Schiebers aufweist (DE-A-27 11 904).

Derartige Spannfutter besitzen den Vorteil, daß nur noch der vordere Backenteil ausgewechselt werden braucht und daß es allein durch Verstellen des Kupplungsstückes möglich ist, die beiden Backenteile zum Spannvorgang miteinander zu verbinden oder zum Auswechseln des vorderen Backenteiles voneinander zu trennen. Sind beide Backenteile getrennt, kann der vordere Backenteil ausgewechselt oder gegenüber dem hinteren Backenteil verstellt werden, wobei der hintere Backenteil in seiner Stellung im Futterkörper unverändert stehen und insbesondere im kraft- und formschlüssigen Eingriff mit dem die radiale Backenverstellung bewirkenden Antriebsglied verbunden bleibt. Dieser Eingriff braucht somit zum Backenwechsel nicht vorübergehend aufgehoben werden.

Der hintere Backenteil ist auch dann radial verstellbar, wenn der Schieber durch das Stellglied in den ausgerückten Kupplungszustand verstellt, also die Verbindung zwischen dem vorderen und dem hinteren Backenteil aufgehoben ist. Das ständig mit den hinteren Backenteilen form- und kraftschlüssig verbundene Antriebsglied kann daher auch in diesem Fall unbehindert axiale Spannverstellungen ausführen, also auch über seine üblicherweise aus Sicherheitsgründen vorgesehenen Wegkontrolleinrichtungen das Anlaufen der Drehmaschine mit dem Ergebnis freigeben, daß die vom hinteren Backenteil gelösten vorderen Backenteile vom Futterkörper abfliegen.

Der Erfindung liegt die Aufgabe zugrunde, ein Spannfutter der eingangs genannten Art so weiter auszubilden und zu verbessern, daß die Spannbewegung des Antriebsgliedes bei nicht voll im eingerückten Kupplungszustand befindlichen Schiebern verriegelt ist und dadurch das Anlaufen der Drehmaschine verhindert wird.

Diese Aufgabe wird nach der Erfindung dadurch gelöst, daß der Futterkörper an der dem vorderen Backenteil entgegengesetzten Seite des hinteren Backenteiles eine Anschlagfläche für die rückwärtige Stirnfläche des Schiebers besitzt, die den Schieber im eingerückten Kupplungszustand verriegelt, und daß der Futterkörper in dieser Anschlagfläche eine Aussparung aufweist, in die der Schieber bei entsprechender Stellung des hinteren Backenteiles zumindest in radialer Richtung im wesentlichen formschlüssig eintreten kann und bis in den ausgerückten Kupplungszustand verstellbar ist.

Der durch die Erfindung erreichte Fortschritt besteht im wesentlichen darin, daß eine Verstellung des Schiebers in den ausgerückten Kupplungszustand nur unter Eintritt des Schiebers in die seine Bewegung in radialer Richtung sperrende, weil ihn in dieser Richtung formschlüssig aufnehmende Aussparung des Futterkörpers möglich ist. Über den in die Aussparung eingetretenen Schieber ist dann aber auch der hintere Backenteil gegen radiale Verstellbewegungen verriegelt, so daß im Ergebnis auch das in kraft- und formschlüssiger Verbindung mit dem hinteren Backenteil stehende Antriebsglied keiner axialen Spannverstellungen mehr fähig ist. Der im ausgerückten Kupplungszustand befindliche Schieber blockiert somit das Antriebsglied und dadurch das Anlaufen der Drehmaschine. Da diese Sicherung getrennt an jeder einzelnen Spannbacke wirksam wird, können die Verbindungen beider Backenteile an den verschiedenen Spannbacken nacheinander gelöst und wieder hergestellt werden, ohne daß dabei der Kupplungszustand der Backenteile an den anderen Spannbacken beeinflußt wird.

Eine bevorzugte Ausführungsform des Spannfutters ist dadurch gekennzeichnet, daß das gegen eine Rückstellkraft radial gegen die Futterachse eindrückbare Stellglied eine im Schieber vorgesehene, seine axiale Verstellbewegung ermöglichende Aussparung durchgreift und im Bereich dieser Aussparung die schrägen Führungsflächen für die axiale Zwangsführung des Schiebers trägt, und daß das Stellglied nur in der eingedrückten Stellung die unter der Kraft einer Feder erfolgende Bewegung des Schiebers in den ausgerückten Kupplungszustand freigibt, bei seiner Rückstellung den Schieber über die schrägen Führungsflächen in den eingerückten Kupplungszustand verstellt und in seiner ungedrückten Stellung den Schieber durch an die schrägen Führungsflächen anschließende radial gerichtete Sperrflächen im eingedrückten Kupplungszustand verriegelt. Bei ungedrücktem Stellglied kann dann bei der radialen Verstellung des hinteren Backenteiles der Schieber die für seine Aufnahme vorgesehene Aussparung des Futterkörpers passieren, ohne in sie einzutreten, da er durch das Stellglied im eingedrückten Kupplungszustand verriegelt ist. Erst bei eingedrücktem Stellglied wird diese Verriegelung aufgehoben, so daß der Schieber beim Passieren der Aussparung unter der Kraft der Feder in die Aussparung einspringen und sich dadurch in den ausgerückten Kupplungszustand verstellen kann. In konstruktiver Hinsicht besitzen zweckmäßig der hintere Backenteil und der Schieber kreiszylindrischen Querschnitt.

Im folgenden wird die Erfindung an einem in der Zeichnung dargestellten Ausführungsbeispiel näher erläutert; es zeigen

Fig. 1 einen Axialschnitt durch ein Spannfutter nach der Erfindung,

Fig. 2 einen Teilschnitt in Richtung II-II durch das Spannfutter nach Fig. 1.

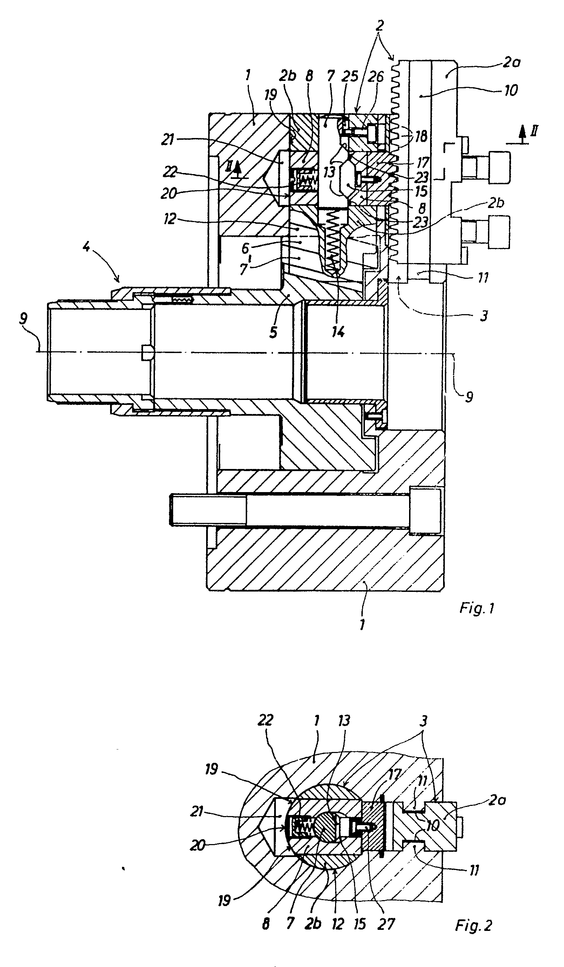

In der Zeichnung ist der Futterkörper des Spannfutters allgemein mit 1, die darin radial verstellbar geführten Spannbacken sind allgemein mit 2 bezeichnet. Zu ihrer Führung sind im Futterkörper allgemein mit 3 bezeichnete radiale Führungsnuten vorgesehen. Im Axialschnitt nach Fig. 1 ist nur eine Spannbacke dargestellt, jedoch besitzt ein solches Futter mehr als nur eine, in der Regel drei Spannbacken 2. Die Spannbacken 2 stehen zu ihrer radialen Verstellung mit einem Antriebsglied 4 im kraft- und formschlüssigen Eingriff, das im Ausführungsbeispiel als axial verstellbare Treibhülse 5 ausgebildet ist, die über Keilhaken 6, 7' mit den Spannbacken 2 im Eingriff steht, wobei der Keilhaken 6 an der Treibhülse 5, der Keilhaken 7' an der Spannbacke 2 sitzt. Wird die Treibhülse 5 in Fig. 1 nach links verschoben, so werden die Spannbacken 2 radial einwärts bewegt, bei entgegengesetzter axialer Verstellung der Treibhülse 5 dagegen radial auswärts verschoben. Die Treibhülse 5 kann in bekannter und daher hier nicht näher zu beschreibender Weise durch einen Spannzylinder betätigt werden, dessen Spannkolben durch die hohle Drehmaschinenspindel hindurch über eine Zugstange oder ein Zugrohr mit der Treibhülse 5 verbunden sein kann. Ein solcher Kraftspannzylinder kann aber auch unmittelbar im Futterkörper 1 angeordnet sein. Die im Ausführungsbeispiel vorgesehenen Keilhaken 6, 7' können auch durch andere, den Antrieb der Spannbacken 2 durch das Antriebsglied 5 vermittelnde Verbindungsglieder ersetzt sein.

Die Spannbacken 2 sind radial und quer zur Futterachse 9, im Ausführungsbeispiel in einer zur Futterachse 9 senkrechten Ebene, in einen axial vorderen Backenteil 2a und einen axial hinteren Backenteil 2b getrennt. Beide Backenteile 2a, 2b sind jeweils für sich radial verstellbar in den Nuten 3 des Futterkörpers 1 geführt, nämlich der vordere Backenteil 2a mit Führungsnuten 10 in entsprechenden Führungsleisten 11 des Futterkörpers 1, und der hintere kreiszylindrische Backenteil 2b in entsprechend kreiszylindrischen Führungsnuten 12 des Futterkörpers 1. Im übrigen lassen die Stellung des hinteren Backenteiles 2b und die Eingriffsverhältnisse der Keilhaken 6, 7' in Fig. 1 erkennen, daß die hinteren Backenteile 2b in ihrer radial jeweils äußersten Stellung gezeigt sind.

Von beiden Backenteilen 2a, 2b steht jeweils nur der hintere Backenteil 2b mit dem Antriebsglied 4, im Ausführungsbeispiel also den Keilhaken 6 der Treibhülse 5, im Eingriff. Ein ein- und ausrückbares Kupplungsstück in Form eines im hinteren Backenteil 2b parallel zur Futterachse geführten, in radialer Richtung am Backenteil 2b starr, d. h. unverstellbar gehaltenen Schiebers 8 von im wesentlichen kreiszylindrischem Querschnitt dient dazu, daß im eingerückten Kupplungszustand, wie er in der Zeichnung dargestellt ist, beide Backenteile 2a, 2b zur radialen Mitnahme des vorderen Backenteiles 2a durch den hinteren Backenteil 2b starr verbunden sind, während der Schieber 8 im nicht dargestellten ausgerückten Kupplungszustand den vorderen Backenteil 2a zur vom hinteren Backenteil 2b unabhängigen radialen Verstellung freigibt, so daß der vordere Backenteil 2a aus der radialen Führungsnut 3 vollständig herausgenommen und gegen einen anders gestalteten Backenteil ausgewechselt werden kann. Der hintere Backenteil 2b dagegen ist nicht auswechselbar und bleibt ständig im Eingriff mit dem Antriebsglied 4.

Der Schieber 8 trägt einen Kupplungskopf 17, der bei vorgestelltem Schieber 8, wie dargestellt, in radialer Richtung formschlüssig in zugeordnete Kupplungsaufnahmen 18 des vorderen Backenteiles 2a eingreift. Dabei ist in der Zeichnung als einfachste Ausführungsform die Ausbildung des Schiebers 8 als kreiszylindrischer Bolzen dargestellt. Die Kupplungsaufnahmen 18 werden durch eine Querverzahnung an der dem hinteren Backenteil 2b zugewendeten Trennfläche des vorderen Backenteiles 2a gebildet. Der Kupplungskopf 17 ist mit einer entsprechenden Verzahnung versehen, die in die des vorderen Backenteiles 2a eingreift, wie es die Fig. 1 unmittelbar erkennen läßt.

Zur Verstellung zwischen dem eingerückten und dem ausgerückten Zustand sind die Schieber 8 an einem von außen betätigbaren Stellglied 7 zwangsgeführt. Das Stellglied 7 ist seinerseits im wesentlichen radial verstellbar im hinteren Backenteil 2b geführt und besitzt schräge Führungsflächen 13 für die axiale Zwangsführung des Schiebers 8. Im einzelnen ist das Stellglied 7 ein gegen eine durch eine Feder 14 gebildete Rückstellkraft radial einwärts gegen die Futterachse 9 eindrückbarer zylindrischer Bolzen, der eine im Schieber 8 vorgesehene, die axiale Verstellbewegung des Schiebers 8 ermöglichende Aussparung 15 durchgreift und im Bereich dieser Aussparung 15 die schrägen Führungsflächen 13 trägt.

Der Futterkörper 1 besitzt an der dem vorderen Backenteil 2a entgegengesetzten Seite des hinteren Backenteiles 2b eine Anschlagfläche 19 für die rückwärtige Stirnfläche 20 des Schiebers 8. Diese Anschlagfläche 19 verriegelt den Schieber 8 im eingerückten Kupplungszustand. Ferner weist der Futterkörper 1 in dieser Anschlagfläche 19 eine Aussparung 21 auf, in die der Schieber 8 bei entsprechender Stellung des hinteren Backenteiles 2b zumindest in radialer Richtung im wesentlichen formschlüssig eintreten kann und dann axial bis in den ausgerückten Kupplungszustand verstellbar ist. Ist somit der Schieber in die Aussparung 21 eingetreten, sperrt er den hinteren Backenteil 2b gegen radiale Verstellungen wegen des in dieser Richtung bestehenden Formschlusses zwischen dem Schieber 8 und der Aussparung 21, so daß im Ergebnis auch das Antriebsglied 4 keiner axialen Spannverstellungen mehr fähig ist. Die Drehmaschine kann somit nicht anlaufen, wenn sich der Schieber 8 im ausgerückten Kupplungszustand befindet und dadurch die Verbindung zwischen dem hinteren Backenteil 2b und dem vorderen Backenteil 2a an einer der Spannbacken 2 aufgehoben ist.

Das Stellglied 7 ist in der Zeichnung in seiner ungedrückten Stellung gezeigt. Es gibt nur in der eingedrückten Stellung die unter der Kraft einer Feder 22 erfolgende Bewegung des Schiebers 8 in den ausgerückten Kupplungszustand frei. Bei seiner Rückbewegung unter der Wirkung der durch die Feder 14 erzeugten Rückstellkraft verstellt das Stellglied 7 den Schieber 8 über die schrägen Führungsflächen 13 wieder in den eingerückten Kupplungszustand. In seiner ungedrückten Stellung schließlich verriegelt das Stellglied 7 den Schieber 8 durch an die schrägen Führungsflächen 13 anschließende radial gerichtete Sperrflächen 23 im eingerückten Kupplungszustand, wie in Fig. 1 dargestellt. Der Schieber 8 besitzt in dieser Stellung des Stellgliedes 7 somit keine Möglichkeit, in die für ihn vorgesehene Aussparung 21 des Futterkörpers 1 einzutreten, wenn er im Zuge der radialen Verstellungen des hinteren Backenteiles 2b diese Aussparung 21 passiert. Der Eintritt des Schiebers 8 in die Aussparung 21 und damit seine Verstellung in den ausgerückten Kupplungszustand ist somit nur bei eingedrücktem Stellglied 7 möglich.

Das Stellglied 7 ist durch einen in eine Längsnut 25 eingreifenden, im Futterkörper 1 gehaltenen Führungsstift 26 gegen Verdrehungen um seine Achse gesichert. Der Kupplungskopf 17 ist durch eine Schraube 27 am Schieber 8 gehalten.

## Patentansprüche

1. Spannfutter für Drehmaschinen mit radial im Futterkörper (1) verstellbaren Spannbacken (2), die zu ihrer Verstellung einzeln oder gemeinsam mit einem mit Wegkontrolleinrichtungen verbundenen Antriebsglied (4, 5) in kraft- und formschlüssigem Eingriff stehen, wobei die Spannbacken (2) radial und quer zur Futterachse (9) in einen axial vorderen Backenteil (2a) und einen axial hinteren Backenteil (2b) aufgetrennt sind, beide Backenteile (2a, 2b) jeweils für sich radial verstellbar im Futterkörper (1) geführt sind, und nur der hintere Backenteil (2b) mit dem Antriebsglied (4, 5) im Eingriff steht, und wobei ein ein- und ausrückbares Kupplungsstück in Form eines am hinteren Backenteil (2b) parallel zur Futterachse (9) geführten, in radialer Richtung starr gehaltenen Schiebers (8) vorgesehen ist, der im eingerückten Kupplungszustand beide Backenteile (2a, 2b) zur radialen Mitnahme des vorderen Backenteiles (2a) durch den hinteren Backenteil (2b) verbindet und im ausgerückten Kupplungszustand den vorderen Backenteil (2a) zur vom hinteren Backenteil (2b) unabhängigen radialen Verstellung freigibt und der zur Verstellung zwischen dem eingerückten und dem ausgerückten Zustand an einem von außen betätigbaren Stellglied (7) zwangsgeführt ist, das seinerseits im wesentlichen radial verstellbar im hinteren Backenteil (2b) geführt ist und schräge Führungsflächen (13) für die axiale Zwangsführung des Schiebers (8) aufweist, dadurch gekennzeichnet, daß der Futterkörper (1) an der dem vorderen Backenteil (2a) entgegengesetzten Seite des hinteren Backenteiles (2b) eine Anschlagfläche (19) für die rückwärtige Stirnfläche (20) des Schiebers (8) besitzt, die den Schieber (8) im eingerückten Kupplungszustand verriegelt, und daß der Futterkörper (1) in dieser Anschlagfläche (19) eine Aussparung (21) aufweist, in die der Schieber (8) bei entsprechender Stellung des hinteren Backenteiles (2b) zumindest in radialer Richtung im wesentlichen formschlüssig eintreten kann und axial bis in den ausgerückten Kupplungszustand verstellbar ist.

2. Spannfutter nach Anspruch 1, dadurch gekennzeichnet, daß das gegen eine Rückstellkraft radial gegen die Futterachse (9) eindrückbare Stellglied (7) eine im Schieber (8) vorgesehene, seine axiale Verstellbewegung ermöglichende Aussparung (15) durchgreift und im Bereich dieser Aussparung (15) die schrägen Führungsflächen (13) für die axiale Zwangsführung des Schiebers (8) trägt, und daß das Stellglied (7) nur in der eingedrückten Stellung die unter der Kraft einer Feder (22) erfolgende Bewegung des Schiebers (8) in den ausgerückten Kupplungszustand freigibt, bei seiner Rückstellung den Schieber (8) über die schrägen Führungsflächen (13) in den eingerückten Kupplungszustand verstellt und in seiner ungedrückten Stellung den Schieber (8) durch an die schrägen Führungsflächen (13) anschließende radial gerichtete Sperrflächen (23) im eingerückten Kupplungszustand verriegelt.

3. Spannfutter nach Anspruch 1 oder 2, dadurch gekennzeichnet, daß der hintere Backenteil (2b) und der Schieber (8) kreiszylindrischen Querschnitt haben.

## Claims

1. A clamping chuck for turning lathes having clamping jaws (2) which are radially displaceable in the chuck body (1) and which are force-lockingly and form-lockingly engaged for displacement thereof individually or jointly with an actuating member (4, 5) which is connected to travel monitoring means, wherein the clamping jaws (2) are divided radially and transversely with respect to the chuck axis (9) into an axially forward jaw portion (2a) and an axially rearward jaw portion (2b), both jaw portions (2a and 2b) each being guided for radial displacement in itself in the chuck body (1) and only the rearward jaw portion (2b) being in engagement with the actuating member (4, 5), and wherein there is provided an engageable and disengageable connecting means in the form of a slider (8) which is guided on the rearward jaw portion (2b) parallel to the chuck axis (9) and which is mounted rigidly in the radial direction and which, in the engaged connecting condition, connects both jaw portions (2a, 2b) for radial entrainment of the forward jaw portion (2a) by the rearward jaw portion (2b) and in the disengaged condition releases the forward jaw portion (2a) for radial displacement independently of the rearward jaw portion (2b) and which, for displacement between the engaged and the disengaged condition, is positively guided at an adjusting member (7) which is actuable from the exterior and which in turn is guided for substantially radial displacement in the rearward jaw portion (2b) and which has inclined guide surface (13) for axial positive movement of the slider (8), characterised in that, at the side of the rearward jaw portion (2b), which is remote from the forward jaw portion (2a), the chuck body (1) has an abutment surface (19) for the rearward end face (20) of the slider (8), which locks the slider (8) in the engaged connecting condition, and that in said abutment surface (19) the chuck body (1) has a recess (21) into which the slider (8) can engage substantially form-lockingly at least in the radial direction upon suitable positioning of the rearward jaw portion (2b), with the slider being displaceable axially into the disengaged condition of the connecting means.

2. A chuck according to claim 1 characterised in that the adjusting member (7) which can be pressed in radially towards the chuck axis (9) against a return force engages through an opening (15) which is provided in the slider (8) and which permits axial movement thereof, wherein the adjusting member (7) carries the inclined guide surfaces (13) for axial positive displacement of the slider (8), in the region of said opening (15), and that only in the inwardly pressed position does the adjusting member (7) permit the movement of the slider (8) into the disengaged condition, under the force of a spring (22), the adjusting member (7) in its return movement displacing the slider (8) by way of the inclined guide surfaces (13) into the engaged connecting position and, in its unpressed position, locking the slider (8) in the engaged connecting condition by means of radially directed locking surfaces (23) which adjoin the inclined guide surface (13).

3. A chuck according to claim 1 or claim 2 characterised in that the rearward jaw portion (2b) and the slider (8) are of circular-cylindrical cross-section.

## Revendications

1. Mandrin de serrage pour machines tournantes, notamment pour tours, comportant:
— un corps (1) dans lequel peuvent ·être déplacées radialement des mâchoires de serrage (2) qui, pour leur déplacement, sont — individuellement ou collectivement — en prise, avec conjugaison de forces et de formes, avec un organe d'entraînement (4, 5) lié à des moyens de contrôle de position, ces mâchoires (2) étant partagées chacune, radialement et perpendiculairement à l'axe (9) du mandrin, en une partie antérieure (2a) et une partie postérieure (2b) (»antérieure« et »postérieure« étant compris en considérant une direction axiale) qui peuvent être déplacées radialement, chacune pour soi, dans le corps (1) où elles sont guidées, seule la partie postérieure (2b) étant en prise avec l'organe d'entraînement (4, 5); et↖
— une pièce d'accouplement apte à être mise à une condition de couplage dite condition d'accouplement et à une condition de couplage dite condition de désaccouplement, cette pièce étant réalisée sous la forme d'un coulisseau (8) qui est guidé parallèlement à l'axe (9) du mandrin, sur la partie postérieure (2b), et est maintenu rigidement en direction radiale, ce coulisseau (8) créant — dans la direction d'accouplement — une liaison entre les deux parties de mâchoire (2a, 2b), pour que la partie antérieure (2a) soit entraînée radialement par la partie postérieure (2b), et libérant — dans la condition de désaccouplement — la partie antérieure (2a) pour permettre à celle-ci d'être déplacée radialement, indépendamment de la partie postérieure (2b), ce coulisseau (8) étant en outre, pour être amené de l'une à l'autre desdites conditions de couplage, soumis à une commande par guidage forcé contre un organe positionneur (7) actionnable de l'extérieur, lequel organe (7) est lui-même guidé dans la partie postérieure (2b) avec possibilité d'y être déplacé sensiblement radialement et possède des surfaces obliques (13) pour le guidage axial forcé du coulisseau (8);
ce mandrin étant caractérisé par le fait que son corps (1) possède, contre le côté de la partie postérieure (2b) de mâchoire opposé à la partie antérieure (2a) de mâchoire, une surface de butée (19) pour provoquer l'arrêt de la surface terminale arrière (20) du coulisseau (8) et, ainsi, verrouiller ce dernier (8) dans la condition d'accouplement, et par le fait que le corps (1) du mandrin comporte dans cette surface de butée (19) un évidement (21) dans lequel le coulisseau (8) peut, lorsque la partie postérieure (2b) est en position correspondante, pénétrer en établissant une liaison par obstacle au moins en direction radiale et être déplacé axialement jusqu'à la condition de désaccouplement.

2. Mandrin selon la revendication 1, caractérisé par le fait que l'organe positionneur (7) peut être enfoncé radialement vers l'axe (9) du mandrin, cela contre une force de rappel, et traverse un évidement (15) prévu dans le coulisseau (8) dont il autorise le déplacement axial, et porte — dans la région de cet évidement — les surfaces obliques (13) pour le guidage forcé axial du coulisseau (8), par le fait que ce n'est que lorsqu'il est enfoncé que l'organe positionneur (7) autorise l'accomplissement, sous la force d'un ressort (22), du déplacement du coulisseau (8) vers la condition de désaccouplement, par le fait que, lors de son rappel, cet organe positionneur (7) amène, par ses surfaces obliques (13), le coulisseau (8) à la condition d'accouplement, et par le fait que, dans sa position de non-enfoncement, cet organe positionneur (7) verrouille, par des surfaces d'arrêt (23) dirigées radialement et se raccordant aux surfaces obliques (13), le coulisseau (8) à la condition d'accouplement. .

3. Mandrin selon la revendication 1 ou 2, caractérisé par le fait que la partie postérieure (2b) et le coulisseau (8) possèdent un profil cylindrique circulaire.

Fig. 1

Fig. 2